# FASCICULE DE BREVET EUROPEEN

(11) **EP 1 364 545 B1**
(45) Date de publication et mention de la délivrance du brevet: **07.11.2007**
(21) Numéro de dépôt: 02706890.7
(22) Date de dépôt: 22.02.2002
(51) Int. Cl.: H04Q 7/36, H04L 12/56, H04L 12/28

(54) **SYSTEME DE RADIOCOMMUNICATION LOCAL**
LOKALES RADIOKOMMUNIKATIONSSYSTEM
LOCAL RADIO COMMUNICATION SYSTEM

(30) Priorité: 28.02.2001 FR 0102724
(43) Date de publication de la demande: 26.11.2003
(73) Titulaire: Inventel Systèmes, 75005 Paris (FR)
(72) Inventeur: Lewiner, Jacques, 92210 Saint-Cloud (FR); Carreel, Eric, 92190 Meudon (FR)
(74) Mandataire: Kohrs, Martin
(86) Numéro de dépôt international: PCT/FR2002/000665
(87) Numéro de publication internationale: WO 2002/069658

(56) Documents cités:
- EP-A- 0 843 494
- EP-A- 1 028 484
- WO-A-00/27147
- WO-A-98/51109
- GB-A- 2 317 786

## Description

La présente invention est relative aux systèmes de radiocommunication locaux.

Plus particulièrement, l'invention concerne un système de radiocommunication local comprenant plusieurs bases et plusieurs terminaux communiquant chacun avec une des bases selon un protocole de radiocommunication locale à accès multiple par division temporelle (par exemple, le protocole BLUETOOTH^{®} ou le protocole DECT), ce protocole prévoyant, pour chaque base, des créneaux temporels successifs au cours desquels sont transmis soit un paquet d'information montante envoyé par un terminal vers ladite base, soit un paquet d'information descendante envoyé par ladite base vers ledit terminal, et au moins certaines desdites bases étant susceptibles d'interférer entre elles en empêchant la réception par l'une desdites bases d'un paquet d'information montante lorsqu'une autre desdites bases émet un paquet d'information descendante.

Le document WO-A-00/69186 décrit un exemple d'un tel système de radiocommunication locale.

Dans un tel système de radiocommunication locale, il existe toutefois un risque d'interférence entre la transmission d'un paquet d'information montante d'un terminal vers une base et la transmission d'un paquet d'information descendante d'une autre base vers un terminal (à une même fréquence ou à une fréquence voisine).

Les documents EP-A-1 028 484 et WO-A-00 27147 décrivent l'utilisation, dans les stations de base d'un système cellulaire, des antennes à directivité contrôlée, lesquelles peuvent prendre plusieurs configurations de directivités différentes, afin de déterminer une configuration capable de réduire les interférences causées dans l'émission d'une station de base donnée par des émissions des stations de base situées dans des celles adjointes.

De telles interférences doivent être évitées car elles rendent "inaudibles" les paquets d'information montante pour les bases, du fait que les signaux radio d'information montante sont généralement reçus par une base avec une puissance nettement plus faible que la puissance des signaux d'information descendante émis par d'autres bases : les paquets d'information montante ainsi perdus doivent ultérieurement être réémis, ce qui diminue le débit efficace du système de radiocommunication.

La présente invention a notamment pour but de pallier cet inconvénient, en permettant de diminuer la probabilité d'interférence entre paquets d'information montante et paquets d'information descendante.

A cet effet, selon l'invention, un système de radiocommunication du genre en question est caractérisé en ce que les bases comportent chacune un réseau d'antennes à directivité contrôlée et sont adaptées pour faire prendre audit réseau d'antennes plusieurs configurations d'antennes de directivités différentes, et en ce que le système de radiocommunication locale comporte :
- des moyens pour faire émettre successivement des signaux radio d'essai par chaque base dans différentes configurations d'antennes, des moyens pour mesurer alors des niveaux de signaux radio reçus par les autres bases et des moyens pour mesurer la qualité de la communication entre la base ayant émis le signal radio d'essai et les terminaux,
- un contrôleur central communiquant avec toutes les bases et commandant lesdites bases, ce contrôleur central étant adapté pour déterminer, parmi les configurations d'antennes de chaque base utilisées lors des émissions de signaux radio d'essais, une configuration d'antennes adaptée pour minimiser le niveau des signaux radio reçus par les autres bases lors de l'émission desdits signaux radio d'essai tout en assurant un qualité de communication satisfaisante entre les bases et tous les terminaux, et ledit contrôleur central étant adapté pour imposer ces configurations d'antennes aux bases.

Dans des modes de réalisation préférés de l'invention, on peut éventuellement avoir recours en outre à l'une et/ou à l'autre des dispositions suivante :
- chaque base est adaptée pour émettre lesdits signaux radio d'essai, pour mesurer les niveaux des signaux radio reçus suite aux signaux radio d'essai émis par les autres bases, et pour transmettre au contrôleur lesdits niveaux de signaux radio reçus,
chaque terminal est adapté pour émettre une réponse lorsqu'il reçoit un signal radio d'essai émis par une base, chaque base est en outre adaptée pour déterminer des identités de terminaux ayant répondu à chacun de ses signaux radio d'essai, pour mesurer les niveaux de signaux reçus des terminaux en réponse auxdits signaux radio d'essai et pour transmettre au contrôleur ces identités ainsi que lesdits niveaux de signaux radio ainsi reçus des terminaux, lesdites identités correspondant aux terminaux qui peuvent communiquer avec la base en question dans la configuration d'antennes de cette base ayant servi à émettre ledit signal d'essai,
et le contrôleur est adapté pour déterminer des configurations d'antennes respectives des différentes bases permettant de minimiser les niveaux de signaux radio reçus par les bases lors de l'émission desdits signaux radio d'essai tout en assurant que chaque terminal communique de façon satisfaisante avec au moins une base avec ces configurations d'antennes ;
- les bases sont adaptées pour transmettre au contrôleur, à intervalle de temps régulier, les identités de tous les terminaux appartenant au système de radiocommunication locale ;
- le contrôleur est adapté pour synchroniser les différentes bases entre elles, de façon que toute lesdites bases émettent sensiblement pendant les mêmes créneaux temporels et reçoivent sensiblement pendant les mêmes créneaux temporels (à la différence près entre la durée des paquets d'information de longueur standard et la durée des créneaux temporels, cette différence étant généralement appelée temps de garde : autrement dit, on peut tolérer ou même imposer de légères différences entre le début des créneaux temporels des différentes bases, pourvu que ces différences soit inférieures au temps de garde susmentionné) ;
- les différentes bases sont disposées au voisinage immédiat les unes des autres ;
- le contrôleur et les bases sont compris dans un même appareil ;
- le contrôleur sert également de concentrateur et fait communiquer les bases avec une liaison externe ;
- les bases et les terminaux sont adaptés pour communiquer selon le protocole BLUETOOTH^{®};
- les bases sont adaptées pour émettre lesdits signaux radio d'essai à intervalle de temps compris entre 5 s et 1 h ;
- certains des terminaux sont des balises fixées en certains emplacements particuliers d'un local desservi par le réseau local de radiocommunication, ces emplacements étant adaptés pour garantir que la totalité dudit local entre bien dans la couverture radio du réseau local de radiocommunication.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un bâtiment équipé d'un système de radiocommunication selon une forme de réalisation de l'invention,
- la figure 2 est un schéma bloc du système de communication de la figure 1,
- et la figure 3 est un graphe représentant les signaux échangés entre deux bases et deux terminaux pendant un court laps de temps.

Sur les différentes figures, les mêmes références désignent des éléments identiques ou similaires.

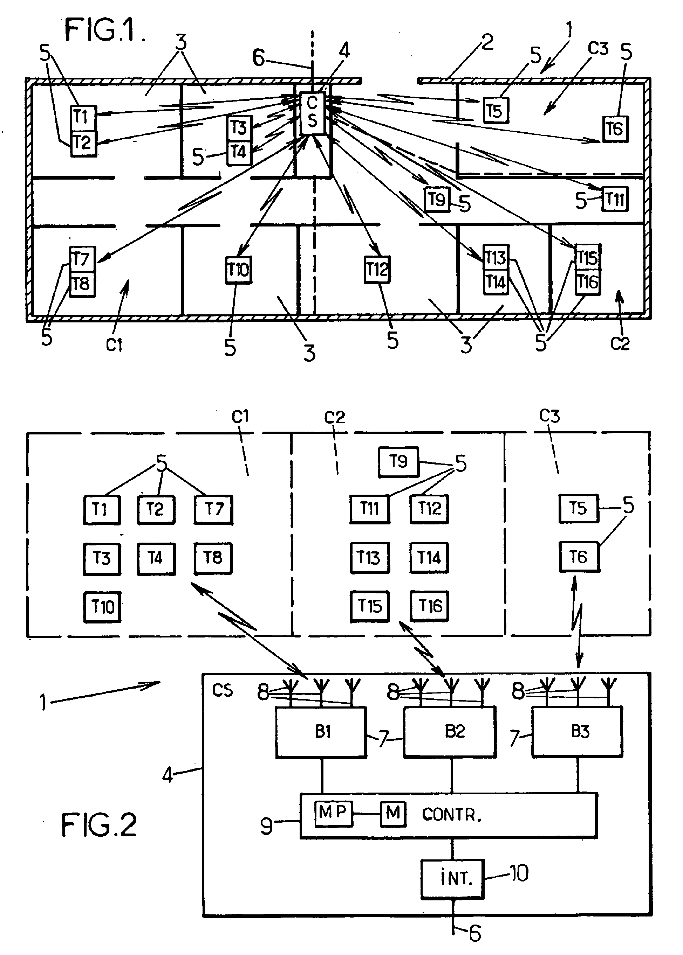

La figure 1 représente un système de radiocommunication local selon une forme de réalisation de l'invention, desservant un local 2 tel qu'un ensemble de bureaux 3, ou encore un local d'habitation, ou autre.

Ce réseau de radiocommunication local comporte une station centrale 4 (CS) qui communique par voie radio avec une pluralité de terminaux fixes ou mobiles 5, selon un protocole de radiocommunication local tel que le protocole BLUETOOTH^{®}, ou encore le protocole DECT, ou autre protocole de type TDMA (accès multiple par division temporelle). Dans ce qui suit, l'invention sera décrite dans le cas particulier du protocole BLUETOOTH^{®}, à titre d'exemple, mais ladite invention s'appliquerait de façon similaire au protocole DECT, ou autre.

Les terminaux 5 peuvent être par exemple des téléphones sans fil, des micro-ordinateurs, des livres électroniques, des postes de télévision numériques, etc.

Ces terminaux 5 peuvent :
- le cas échéant, dialoguer entre eux par l'intermédiaire de la station centrale 4,
- ou encore communiquer avec l'extérieur, toujours par intermédiaire de ladite station centrale 4 qui possède une liaison de télécommunication 6 vers un réseau de télécommunication public. On notera que la liaison 6 peut être soit une liaison filaire, soit une liaison sans fil, par exemple une liaison radio.

Comme représenté sur la figure 2, la station centrale 4 comporte plusieurs bases 7 (B1- B3) reliées à un contrôleur central 9 (CONTR.) qui commande lesdites bases 7 comme il sera expliqué ci-après et qui, dans l'exemple représenté, sert en outre de concentrateur et est relié à la liaison 6 susmentionnée par l'intermédiaire d'une interface 10 (INT.) comprenant par exemple un modem ou autre.

Le contrôleur 9 est un circuit électronique comprenant notamment un microprocesseur MP relié à une mémoire M.

Les bases 7, quant à elle, sont des bases fixes adaptées pour communiquer avec les terminaux 5 selon le protocole de radiocommunication choisi, par exemple le protocole BLUETOOTH^{®}. De telles bases 7 sont bien connues dans l'état de la technique, de même que les circuits radio des terminaux 5.

Les bases 7 sont disposées à proximité immédiate les unes des autres, et de préférence la station centrale 4 forme un appareil unique.

De plus, les bases 7 sont équipées chacune d'un réseau d'antennes 8 à directivité contrôlée, les circuits électroniques de chaque base 7 étant alors adaptés, de façon connue en soi, pour déphaser les différentes antennes 8 de chaque base 7 les unes par rapport aux autres de façon à créer une directivité spatiale en réception et en émission.

Compte tenu de cette directivité des réseaux d'antennes 8, et compte tenu également de la configuration du local 2, chacune des bases 7 communique avec seulement une partie des terminaux 5, qui lui sont affectés, au sein d'une cellule, respectivement C1, C2, C3. Ainsi, dans l'exemple représenté sur les figures 1 et 2, la base B1 communique avec les terminaux T1, T2, T3, T4, T7, T8, et T10, la base B2 communique avec les terminaux T9, T11, T12, T13, T14, T15, et T16, et la base B3 communique avec les terminaux T5, T6.

De préférence, les bases transmettent au contrôleur 9, à intervalle de temps régulier, les identités de tous les terminaux 5 appartenant au système de radiocommunication locale, c'est à dire de tous les terminaux avec lesquels elles communiquent respectivement (éventuellement, seules des mises à jour de cette liste peuvent être communiquées au contrôleur 9 par les bases, par exemple lorsqu'un base perd la liaison avec un terminal ou lorsqu'une base entre en liaison avec un nouveau terminal).

En effet, lorsque certains des terminaux 5 sont déplacés, par exemple les terminaux T9 et T11 dans l'exemple représenté sur les figures 1 et 2, ces terminaux peuvent le cas échéant cesser de communiquer avec la base 7 à laquelle ils étaient précédemment affectés et éventuellement communiquer avec une nouvelle base 7.

Ces changements de bases peuvent être pilotés par exemple par le contrôleur 9, en fonction notamment de la qualité de la communication entre chaque terminal 5 et chaque base 7.

Chaque base 7 communique avec les terminaux 5 qui lui sont affectés selon un processus maître/esclave où la base 7 joue le rôle de maître dès lors que la liaison radio a été établie avec le terminal 5 correspondant.

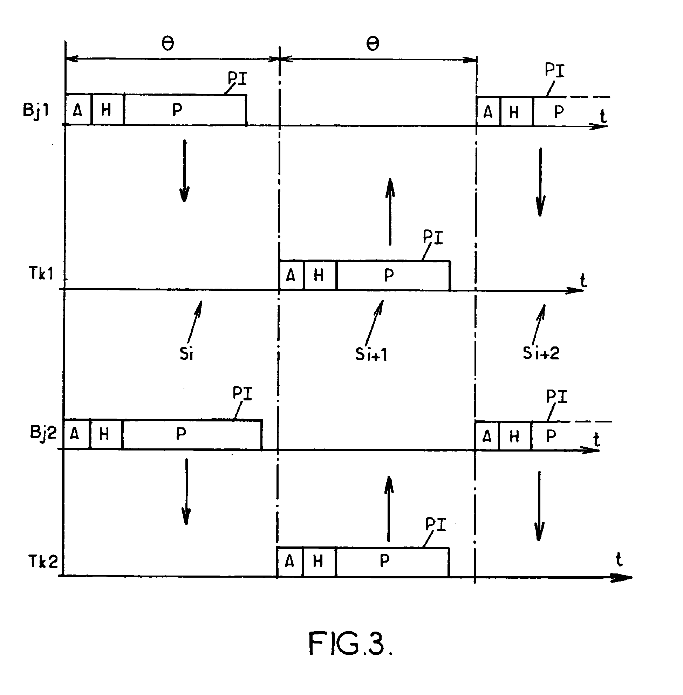

Dans ce processus maître/esclave, la base 7 contrôle la communication avec chaque terminal 5 qui lui est affecté, en commandant l'utilisation de créneaux temporels successifs Si, Si+1, Si+2, etc. (voir figure 3), qui sont de durée constante θ valant 625 µs et qui sont destinés à permettre chacun la transmission d'un paquet d'information PI (ou deux paquets d'information dans le cas particulier de paquets émis en mode "PAGE" transmettant uniquement un code d'identité d'une base vers les terminaux, ou encore une portion de paquet d'information PI lorsqu'il s'agit d'un paquet s'étendant sur plusieurs créneaux successifs).

Dans l'exemple considéré, où le protocole de radiocommunication utilisé est le protocole BLUETOOTH^{®}, chaque paquet d'information PI comprend un code d'accès d'une longueur de 72 bits, un en-tête H d'une longueur de 54 bits, et une partie utile P, transportant par exemple de la voix et/ou d'autres informations sous forme numérique, d'une longueur comprise entre 0 et 2745 bits. De plus, les échanges entre bases et terminaux se font pour chaque base dans un canal fréquentiel choisi parmi 80 canaux disponibles, déterminé par chaque base selon un processus aléatoire (la fréquence utilisée est donc connue de chaque base après cette détermination aléatoire).

Dans le cas le plus courant, chaque paquet d'information PI est un paquet d'information standard compris dans un seul créneau temporel Si, d'une durée légèrement inférieure à la durée θ susmentionnée, et les créneaux temporels successifs sont affectés alternativement :
- aux émissions par la base de paquets d'information descendante vers les terminaux 5 correspondant à cette base,
- et aux réceptions par la base de paquets d'information montante émis par les terminaux affectés à cette base.

Ainsi, dans l'exemple considéré, les créneaux temporels de rang pair de chaque base 5 sont affectés aux liens descendants, c'est-à-dire aux émissions de paquets d'information descendante par cette base, tandis que les créneaux temporels de rang impair sont affectés aux liens montants, c'est-à-dire aux réceptions par la base de paquets d'information montante provenant des terminaux.

Comme représenté sur la figure 3 dans le cas simplifié de deux bases Bj1, Bj2 communiquant respectivement chacune avec un seul terminal, respectivement Tk1, Tk2, le contrôleur 9 impose de préférence aux différentes bases 7 une synchronisation de leurs créneaux temporels Si, Si+1, Si+2 (avec éventuellement de légères différences fortuites ou volontaires entre les débuts des créneaux temporels des différentes bases, inférieures au temps de garde, c'est à dire à la différence entre la durée θ et la durée d'un paquet d'information standard), en faisant également en sorte que les rangs des créneaux temporels des différentes bases coïncident les uns avec les autres.

Cette disposition permet déjà d'éviter une partie des interférences entre canaux, c'est-à-dire des interférences entre l'émission d'un paquet d'information descendante par l'une des bases 7, par exemple la base des Bj1, pendant la réception d'un paquet d'information montante par une autre base, par exemple la base Bj2, auquel cas la réception du paquet d'information montante est rendu impossible compte tenu de l'amplitude beaucoup plus élevée du signal radio correspondant au paquet d'information descendante par rapport à l'amplitude du signal radio correspondant au paquet d'information montante.

Toutefois, cette disposition ne suffit pas à éviter une fraction suffisante des interférences entre canaux, puisque les bases 7 et/ou les terminaux 5 peuvent émettre des grands paquets d'information s'étendant sur plusieurs créneaux temporels successifs, en l'occurrence trois créneaux temporels ou cinq créneaux temporels dans le cas du protocole de radiocommunication BLUETOOTH^{®}.

Dans ce cas, il existe en effet un risque de voir l'un des terminaux 5 émettre un paquet d'information montante pendant le créneau ou les créneaux temporels de rang impair au cours desquels se poursuit l'émission d'un long paquet d'information descendante par l'une des bases 7, auquel cas le paquet d'information montante en question risque de ne pas être reçu par la base correspondante.

De même, lorsqu'un long paquet d'information montante est émis par l'un des terminaux 5 vers la base 7 correspondante, il existe un risque de voir une autre base 7 émettre un paquet d'information descendante dans le créneau temporel ou dans l'un des créneaux temporels de rang pair tombant pendant l'émission dudit long paquet d'information montante : dans ce cas, ledit paquet de données d'information montante risque d'être mal reçu par la base correspondante.

Dans les deux cas envisagés ici, une nouvelle émission du paquet d'information montante non reçu est nécessaire, ce qui diminue le débit du système d'information.

Pour pallier cet inconvénient, chaque base 7 peut éventuellement transmettre en temps réel au contrôleur 9, la chronologie de ses émissions et réceptions prévues, ce qui est possible compte tenu du fait que les bases 7 contrôlent elles-mêmes la communication avec les terminaux 5 qui leur sont affectés (notamment, le paquets d'information montante sont envoyés par les terminaux en réponse à des messages reçus des bases).

Le contrôleur 9 détermine alors en temps réel s'il existe un risque d'interférence entre les émissions et les transmissions prévues par les différentes bases 7. S'il existe un tel risque d'interférence, le contrôleur 9 impose aux différentes bases 7 une chronologie des transmissions prévues (émissions et/ou réceptions) permettant d'éviter au moins une partie desdites interférences et de préférence la totalité de ces interférences.

Par exemple, le contrôleur 9 impose à une ou plusieurs bases 7 de différer certaines émissions et/ou réceptions prévues de paquets d'information.

En particulier, le contrôleur 9 peut être adapté pour :
- lorsqu'une base 7 doit envoyer un paquet d'information long (s'étendant sur 3 ou 5 créneaux temporels dans le cas du protocole BLUETOOTH^{®}) à un terminal 5, interdire aux autres bases d'envoyer aux autres terminaux 5 un paquet d'information descendante demandant une réponse pendant la durée de transmission dudit paquet d'information long,
- et lorsqu'un terminal 5 doit envoyer un paquet d'information long à une base 7, interdire aux autres bases d'envoyer un paquet d'information descendante pendant la durée de transmission de ce paquet d'information long.

Le cas échéant, le contrôleur 9 peut donner la priorité à certaines catégories de transmissions d'informations. En particulier, les bases 7 peuvent transmettre au contrôleur 9 en temps réel, non seulement la chronologie de leurs émissions et réceptions prévues, mais également la catégorie de l'information à transmettre, de façon à indiquer au contrôleur 9 notamment si les transmissions prévues sont destinées à transporter des signaux vocaux. Dans ce cas, le contrôleur 9 peut être adapté pour donner la priorité aux transmissions de signaux vocaux, correspondant généralement à des conversations téléphoniques, de façon à éviter des effets de hachure des signaux vocaux transmis.

Par ailleurs, le contrôleur 9 peut éventuellement, à intervalles de temps réguliers (par exemple, avec une périodicité comprise entre 5 s et 1 h, ou de préférence entre 5 et 30 minutes) suivre un processus de réglage des réseaux d'antennes 8 des bases 7, en faisant émettre tour à tour un signal radio d'essai à chacune des bases 7 (notamment un signal en mode "PAGE").

En fonction des modifications intervenues dans l'environnement électromagnétique du système de radiocommunication 1 depuis le dernier réglage (déplacement de meubles notamment métalliques, ouverture ou fermeture de portes ou fenêtres, etc.), chaque base 7 peut alors modifier la directivité de ses antennes 8 au cours de ces émissions de façon à minimiser les signaux reçus par les autres bases 7, tout en assurant que l'ensemble des bases 7 permette de communiquer dans de bonnes conditions avec l'ensemble des terminaux 5 du local 2 considéré.

Au cours de ce processus de réglage, lorsqu'une base émet un signal radio d'essai, le niveau du signal radio mesuré par les autres bases est transmis au contrôleur 9.

De plus, chaque terminal qui reçoit un signal radio d'essai (en l'occurrence, un paquet d'information en mode "PAGE" selon le protocole BLUETOOTH^{®}) émet une réponse vers la base qui a émis ce signal, de sorte que cette base a l'identité de tous les terminaux qui sont adaptés pour communiquer avec elle dans chacune des configurations d'antennes essayées. De plus, chaque base mesure le niveau du signal de réponse qu'elle reçoit de chaque terminal lui ayant répondu, ou en variante, le terminal mesure le niveau du signal qu'il reçoit de chaque base et transmet ce niveau à la base dans sa réponse. Ces identités de terminaux et les niveaux de signal ainsi mesurés sont transmis au contrôleur.

A partir des informations ainsi collectées au cours du processus de réglage, le contrôleur peut déterminer des configurations d'antennes respectives des différentes bases permettant de minimiser les niveaux de signaux radio reçus par les bases lors de l'émission desdits signaux radio d'essai tout en assurant que chaque terminal puisse communiquer dans de bonnes conditions avec au moins une base avec ces configurations d'antennes retenues.

Enfin, le contrôleur 9 impose aux bases 2 les configurations d'antennes retenues, et leur indique les identités des terminaux qui leur sont respectivement affectés.

De plus, lorsque tous les réglages des réseaux d'antennes sont effectués, en fonction des niveaux des signaux radio reçus par les bases au cours du processus de réglage et correspondant aux réglages effectués, le contrôleur 9 détermine et mémorise des paires de bases 7 susceptibles d'interférer mutuellement, c'est-à-dire des paires de bases 7 telles que l'émission par l'une de ces deux bases d'un signal radio d'information descendante vers un terminal 5 soit susceptible d'interférer avec un signal radio d'information montante émis par un autre terminal 5 vers l'autre de ces deux bases, en empêchant alors la bonne réception du signal radio d'information montante.

Dans ce cas, le contrôleur 9 peut avantageusement être adapté pour différer au moins une partie des transmissions prévues, uniquement entre lesdites bases susceptibles d'interférer mutuellement, pour éviter les interférences. Par contre, le contrôleur 9 n'intervient pas sur les transmissions prévues entre bases non susceptibles d'interférer entre elles, ce qui simplifie le travail dudit contrôleur et améliore sa rapidité.

Eventuellement, les mesures susmentionnées des niveaux de signaux radio reçus par les bases 7 pendant la phase de réglage pourraient être effectuées aux différentes fréquences admises par le protocole de radiocommunication local utilisé, et le contrôleur 9 peut déterminer et mémoriser alors des paires de fréquences susceptibles d'interférer mutuellement pour chaque paire de bases 7 susceptibles d'interférer mutuellement.

Autrement dit, le contrôleur 9 mémorise, pour chaque paire de bases 7 susceptibles d'interférer mutuellement, des paires de première et deuxième fréquences telles que l'émission par l'une de ces bases d'un signal radio à la première fréquence, empêche la bonne réception par l'autre base d'un signal radio émis par un terminal 5 à la deuxième fréquence.

Dans le cas envisagé ci-dessus, les bases peuvent être adaptées pour transmettre au contrôleur en temps réel, en plus des informations chronologiques susmentionnées des transmissions prévues, des informations de fréquence prévue indiquant à quelle fréquence doivent s'effectuer les émissions et réceptions prévues, et ledit contrôleur est adapté pour différer au moins une partie des transmissions prévues uniquement pour lesdites fréquences prévues correspondant à une paire de fréquences susceptible d'interférer entre lesdites bases susceptibles d'interférer mutuellement, pour éviter les interférences.

On notera qu'au lieu de comporter des réseaux d'antennes 8 dont la directivité est contrôlée uniquement par voie électronique, les bases 7 pourraient comporter une ou plusieurs antennes 8 directives déplaçables par des moyens électromécaniques.

De plus, on notera également que certains des terminaux 5 pourraient être des balises fixées en certains emplacements particuliers du local 2 adaptés pour garantir que la totalité dudit local entre bien dans la couverture radio du réseau local de radiocommunication 1.

## Revendications

1. Système de radiocommunication local comprenant plusieurs bases (7) et plusieurs terminaux (5) communiquant chacun avec une des bases (7) selon un protocole de radiocommunication locale à accès multiple par division temporelle, ce protocole prévoyant, pour chaque base (7) , des créneaux temporels successifs (Si) au cours desquels sont transmis soit un paquet d'information montante (PI) envoyé par un terminal (5) vers ladite base (7), soit un paquet d'information descendante (PI) envoyé par ladite base (7) vers ledit terminal (5), et au moins certaines desdites bases (7) étant susceptibles d'interférer entre elles en empêchant la réception par l'une desdites bases (7) d'un paquet d'information montante (PI) lorsqu'une autre desdites bases émet un paquet d'information descendante (PI),
**caractérisé en ce que** les bases (7) comportent chacune un réseau d'antennes (8) à directivité contrôlée et sont adaptées pour faire prendre audit réseau d'antennes plusieurs configurations d'antennes de directivités différentes,
et **en ce que** le système de radiocommunication locale comporte :
- des moyens pour faire émettre successivement des signaux radio d'essai par chaque base (7) dans différentes configurations d'antennes, des moyens pour mesurer alors des niveaux de signaux radio reçus par les autres bases (7) et des moyens pour mesurer la qualité de la communication entre la base (7) ayant émis le signal radio d'essai et les terminaux (5),
- un contrôleur central (9) communiquant avec toutes les bases (7) et commandant lesdites bases, ce contrôleur central (9) étant adapté pour déterminer, parmi les configurations d'antennes de chaque base utilisées lors des émissions de signaux radio d'essais, une configuration d'antennes adaptée pour minimiser le niveau des signaux radio reçus par les autres bases (7) lors de l'émission desdits signaux radio d'essai tout en assurant un qualité de communication satisfaisante entre les bases (7) et tous les terminaux (5), et ledit contrôleur central (9) étant adapté pour imposer ces configurations d'antennes aux bases (7).

2. Système de radiocommunication local selon la revendication 1, dans lequel :
- chaque base (7) est adaptée pour émettre lesdits signaux radio d'essai, pour mesurer les niveaux des signaux radio reçus suite aux signaux radio d'essai émis par les autres bases, et pour transmettre au contrôleur (9) lesdits niveaux de signaux radio reçus,
- chaque terminal (5) est adapté pour émettre une réponse lorsqu'il reçoit un signal radio d'essai émis par une base (7),
- chaque base (7) est en outre adaptée pour déterminer des identités de terminaux (5) ayant répondu à ses signaux radio d'essai, pour mesurer les niveaux de signaux reçus des terminaux en réponse auxdits signaux radio d'essai et pour transmettre au contrôleur (9) ces identités ainsi que lesdits niveaux de signaux radio ainsi reçus des terminaux, lesdites identités correspondant aux terminaux qui peuvent communiquer avec la base en question dans la configuration d'antennes de cette base ayant servi à émettre ledit signal d'essai,
- et le contrôleur (9) est adapté pour déterminer des configurations d'antennes respectives des différentes bases (7) permettant de minimiser les niveaux de signaux radio reçus par les bases lors de l'émission desdits signaux radio d'essai tout en assurant que chaque terminal (5) communique de façon satisfaisante avec au moins une base avec ces configurations d'antennes.

3. Système de radiocommunication local selon la revendication 2, dans lequel les bases (7) sont adaptées pour transmettre au contrôleur(9), à intervalle de temps régulier, les identités de tous les terminaux (5) appartenant au système de radiocommunication locale.

4. Système de radiocommunication local selon l'une quelconque des revendications précédentes, dans lequel le contrôleur (9) est adapté pour synchroniser les différentes bases (7) entre elles, de façon que toute lesdites bases émettent sensiblement pendant les mêmes créneaux temporels (Si) et reçoivent sensiblement pendant les mêmes créneaux temporels (Si+1).

5. Système de radiocommunication local selon l'une quelconque des revendications précédentes, dans lequel les différentes bases (7) sont disposées au voisinage immédiat les unes des autres.

6. Système de radiocommunication local selon l'une quelconque des revendications précédentes, dans lequel le contrôleur (9) et les bases (7) sont compris dans un même appareil (4).

7. Système de radiocommunication local selon l'une quelconque des revendications précédentes, dans lequel le contrôleur (9) sert également de concentrateur et fait communiquer les bases (7) avec une liaison externe (6).

8. Système de radiocommunication local selon l'une quelconque des revendications précédentes, dans lequel les bases (7) et les terminaux (5) sont adaptés pour communiquer selon le protocole BLUETOOTH^{®}.

9. Système de radiocommunication local selon l'une quelconque des revendications précédentes, dans lequel les bases (7) sont adaptées pour émettre lesdits signaux radio d'essai à intervalle de temps compris entre 5 s et 1 h.

10. Système de radiocommunication local selon l'une quelconque des revendications précédentes, dans lequel certains des terminaux (5) sont des balises fixées en certains emplacements particuliers d'un local (2) desservi par le réseau local de radiocommunication, ces emplacements étant adaptés pour garantir que la totalité dudit local entre bien dans la couverture radio du réseau local de radiocommunication (1).

## Claims

1. Local radio communication system comprising several bases (7) and several terminals (5) each communicating with one of the bases (7) according to a local radiocommunication protocol with time division multiple access, this protocol providing, for each base (7), successive time slots (Si) during which are transmitted either an upward data packet (PI) sent by a terminal (5) to the said base (7), or a downward data packet (DP) sent by the said base (7) to the said terminal (5), and at least some of the said bases (7) being able to interfere between each other by preventing the reception by one of the said bases (7) of an upward data packet (PI) when another of the said bases is sending a downward data packet (DP), **characterized in that** the bases (7) each comprise a network of controlled directivity antennas (8) and are suitable to cause several configurations of different directivities to be taken from the said antenna network, and **in that** the local radiocommunication system comprises:
- means for successively emitting test radio signals by each base (7) in different antenna configurations, then means for measuring the radio signal levels received by the other bases (7) and means for measuring the quality of the communication between the base (7) having sent the test radio signal and the terminals (5),
- a central controller (9) communicating with all the bases (7) and controlling the said bases, this central controller (9) being suitable to determine, among the antenna configurations of each base used during the emissions of test radio signals, a suitable antenna configuration to minimise the level of the radio signals received by the other bases (7) during the emission of the said test radio signals while providing a satisfactory quality of communication between the bases (7) and all the terminals (5), and the said central controller (7) being suitable to impose these antenna configurations on the bases (7).

2. Local radiocommunication system according to claim 1, in which:
- each base (7) is suitable to send the said test radio signals, for measuring the levels of the radio signals received following the test radio signals sent by the other bases, and for sending the controller (9) the said levels of received radio signals,
- each terminal (5) is suitable to send a response when it receives a test radio signal sent by a base (7),
- each base (7) is moreover suitable to determine the identities of the terminals (5) having answered its test radio signals, to measure the levels of the received signals of the terminals in response to the said test radio signals and to send the controller (9) these identities as well as the said radio signal levels received from the terminals, the said identities corresponding to the terminals that can communicate with the relevant base in the antenna configuration of this base having being used to send the said test signal,
- and the controller (9) is suitable to determine the respective antenna configurations of the different bases (7) enabling the radio signal levels received by the bases during the emission of the said test radio signals to be reduced while ensuring that each terminal (5) communicates in a satisfactory manner with at least one base with these antenna configurations.

3. Local radiocommunication system according to claim 2, in which the bases (7) are suitable to send the controller (9), at regular intervals of time, the identities of all the terminals (5) belonging to the local radiocommunication system.

4. Local radiocommunication system according to any one of the aforementioned claims, in which the controller (9) is suitable to synchronise the different bases (7) between each other, such that all the said bases noticeably emit during the same time slots (Si) and receive notably during the same time slots (Si+1).

5. Local radiocommunication system according to any one of the aforementioned claims, in which the different bases (7) are arranged in the immediate vicinity of each other.

6. Local radiocommunication system according to any one of the aforementioned claims, in which the controller (9) and the bases (7) are contained in the same device (4).

7. Local radiocommunication system according to any one of the aforementioned claims, in which the controller (9) also serves as a concentrator and causes the bases (7) to communicate with an external link (6).

8. Local radiocommunication system according to any one of the aforementioned claims, in which the bases (7) and the terminals (5) are suitable to communicate using the BLUETOOTH® protocol.

9. Local radiocommunication system according to any one of the aforementioned claims, in which the bases (7) are suitable to send the said test radio signals at time intervals comprised between 5 sec and 1 hour.

10. Local radiocommunication system according to any one of the aforementioned claims, in which some of the terminals (5) are beacons fixed in certain particular locations of an area (2) served by the local radiocommunication network, these locations being suitable to ensure that all of the said area falls within the radio coverage of the local radiocommunication network (1).

## Patentansprüche

1. Lokales Radiokommunikationssystem mit mehreren Basisstationen (7) und mehreren Endgeräten (5), die jeweils mit einer der Basisstationen (7) gemäß einem Protokoll für lokale Radiokommunikation gemäß einem Zeitmultiplex-Vielfachzugriffsverfahren kommunizieren, wobei dieses Protokoll für jede Basisstation (7) aufeinander folgende Zeitschlitze (Si) vorsieht, während deren entweder ein von einem Endgerät (5) an die Basisstation (7) gesendetes Uplinkinformationspaket (PI) oder ein von der Basisstation (7) an das Endgerät (5) gesendetes Downlinkinformationspaket (PI) übertragen werden, und wobei mindestens einige der Basisstationen (7) fähig sind, untereinander zu interferieren, und dabei der Empfang eines Uplinkinformationspakets (PI) durch eine der Basisstationen (7) verhindert wird, wenn eine andere der Basisstationen ein Downlinkinformationspaket (PI) aussendet, **dadurch gekennzeichnet, dass** die Basisstationen (7) jeweils ein Array von Antennen (8) mit kontrollierter Richtwirkung umfassen und geeignet sind, um das Antennenarray mehrere Konfigurationen von Antennen mit unterschiedlicher Richtwirkung annehmen zu lassen, und dass das System zur lokalen Radiokommunikation Folgendes aufweist:
- Mittel, um jede Basisstation (7) zum sukzessiven Aussenden von Test-Radiosignalen in unterschiedlichen Antennenkonfigurationen zu veranlassen, Mittel, um dann Pegel von Radiosignalen, die von den anderen Basisstationen (7) empfangen werden, zu messen, und Mittel zur Messung der Qualität der Kommunikation zwischen der Basisstation (7), die das Test-Radiosignal ausgesendet hat, und den Endgeräten (5),
- einen zentralen Controller (9), der mit allen Basisstationen (7) kommuniziert und die Basisstationen steuert, wobei dieser zentrale Controller (9) geeignet ist, um unter den bei den Aussendungen von Test-Radiosignalen verwendeten Antennenkonfigurationen jeder Basisstation eine Antennenkonfiguration zu bestimmen, die geeignet ist, um bei der Aussendung der Test-Radiosignale den Pegel der Radiosignale, die von den anderen Basisstationen (7) empfangen werden, zu minimieren und dabei eine zufrieden stellende Kommunikationsqualität zwischen den Basisstationen (7) und allen Endgeräten (5) sicherzustellen, und wobei der zentrale Controller (9) geeignet ist, um den Basisstationen (7) diese Antennenkonfigurationen vorzugeben.

2. Lokales Radiokommunikationssystem nach Anspruch 1, bei dem
- jede Basisstation (7) geeignet ist, um die Test-Radiosignale auszusenden, um die Pegel der Radiosignale zu messen, die infolge der von den anderen Basisstationen ausgesendeten Test-Radiosignale empfangen werden, und um die Pegel von empfangenen Radiosignalen an den Controller (9) zu übertragen,
- jedes Endgerät (5) geeignet ist, um eine Antwort auszusenden, wenn es ein von einer Basisstation (7) ausgesendetes Test-Radiosignal empfängt,
- jede Basisstation (7) ferner geeignet ist, um Identitäten von Endgeräten (5) zu bestimmen, die auf ihre Test-Radiosignale geantwortet haben, um die Pegel von Signalen zu messen, die als Antwort auf die Test-Radiosignale aus den Endgeräten empfangen werden, und um diese Identitäten sowie die Pegel von derart aus den Endgeräten empfangenen Radiosignalen an den Controller (9) zu übertragen, wobei die Identitäten den Endgeräten entsprechen, die mit der betreffenden Basisstation in der Antennenkonfiguration dieser Basisstation, die zum Aussenden des Testsignals gedient hat, kommunizieren können,
- der Controller (9) geeignet ist, um jeweilige Antennenkonfigurationen der einzelnen Basisstationen (7) zu bestimmen, die es ermöglichen, bei der Aussendung der Test-Radiosignale die Pegel von Radiosignalen, die von den Basisstationen empfangen werden, zu minimieren und dabei sicherzustellen, dass jedes Endgerät (5) zufrieden stellend mit mindestens einer Basisstation mit diesen Antennenkonfigurationen kommuniziert.

3. Lokales Radiokommunikationssystem nach Anspruch 2, bei dem die Basisstationen (7) geeignet sind, um mit regelmäßigem Zeitabstand an den Controller (9) die Identitäten aller Endgeräte (5), die zu dem System zur lokalen Radiokommunikation gehören, zu übertragen.

4. Lokales Radiokommunikationssystem nach einem der vorhergehenden Ansprüche, bei dem der Controller (9) geeignet ist, um die einzelnen Basisstationen (7) untereinander zu synchronisieren, so dass alle Basisstationen im Wesentlichen während derselben Zeitschlitze (Si) aussenden und im Wesentlichen während derselben Zeitschlitze (Si+1) empfangen.

5. Lokales Radiokommunikationssystem nach einem der vorhergehenden Ansprüche, bei dem die einzelnen Basisstationen (7) in unmittelbarer Nähe zueinander angeordnet sind.

6. Lokales Radiokommunikationssystem nach einem der vorhergehenden Ansprüche, bei dem der Controller (9) und die Basisstationen (7) in einem selben Gerät (4) enthalten sind.

7. Lokales Radiokommunikationssystem nach einem der vorhergehenden Ansprüche, bei dem der Controller (9) ebenfalls als Konzentrator dient und die Basisstationen (7) über eine externe Verbindung (6) kommunizieren lässt.

8. Lokales Radiokommunikationssystem nach einem der vorhergehenden Ansprüche, bei dem die Basisstationen (7) und die Endgeräte (5) geeignet sind, um gemäß dem BLUETOOTH®-Protokoll zu kommunizieren.

9. Lokales Radiokommunikationssystem nach einem der vorhergehenden Ansprüche, bei dem die Basisstationen (7) geeignet sind, um die Test-Radiosignale mit einem Zeitabstand zwischen 5 s und 1 h auszusenden.

10. Lokales Radiokommunikationssystem nach einem der vorhergehenden Ansprüche, bei dem einige der Endgeräte (5) Baken sind, die an bestimmten besonderen Orten eines Raums (2) fest aufgestellt sind, der von dem lokalen Radiokommunikationsnetzwerk versorgt wird, wobei diese Orte geeignet sind, um zu gewährleisten, dass der gesamte Raum von der Funkabdeckung des lokalen Radiokommunikationsnetzwerks (1) richtig erfasst wird.
